# EUROPÄISCHE PATENTSCHRIFT

(11) **EP 1 945 966 B1**
(45) Veröffentlichungstag und Bekanntmachung des Hinweises auf die Patenterteilung: **13.01.2010**
(21) Anmeldenummer: 06807708.0
(22) Anmeldetag: 01.11.2006
(51) Int. Cl.: F16D 65/21, F16D 55/225

(54) **HYDRAULISCHE FAHRZEUGBREMSE MIT INTEGRIERTER ELEKTROMECHANISCH BETÄTIGBARER FESTSTELLBREMSE**
HYDRAULIC VEHICLE BRAKE HAVING AN INTEGRATED ELECTROMECHANICALLY ACTUABLE PARKING BRAKE
FREIN DE VÉHICULE HYDRAULIQUE AVEC FREIN D'IMMOBILISATION INTÉGRÉ À COMMANDE ÉLECTROMÉCANIQUE

(30) Priorität: 04.11.2005 DE 102005053055; 11.08.2006 DE 102006037660
(43) Veröffentlichungstag der Anmeldung: 23.07.2008
(73) Patentinhaber: Continental Teves AG & Co. oHG, 60488 Frankfurt (DE)
(72) Erfinder: BALZ, Jürgen, 65510 Hünstetten-Oberlibbach (DE); OLMS, Hans, 64380 Rossdorf (DE); HALASY-WIMMER, Georg, 71665 Vaihingen (DE); KNOP, Volker, 56766 Ilmen (DE); VÖLKEL, Jürgen, 60389 Frankfurt (DE); WINKLER, Thomas, 55122 Mainz (DE)
(86) Internationale Anmeldenummer: PCT/EP2006/068009
(87) Internationale Veröffentlichungsnummer: WO 2007/051809

(56) Entgegenhaltungen:
- EP-A- 0 866 236
- EP-A- 1 584 835
- WO-A-00/61962
- DE-C1- 19 732 168
- US-A1- 2003 042 084
- US-A1- 2004 195 058

## Beschreibung

Die vorliegende Erfindung betrifft eine hydraulische Fahrzeugbremse mit Feststellbremsvorrichtung, insbesondere für Kraftfahrzeuge, mit einem Bremsgehäuse, in dem ein hydraulischer Betriebsdruckraum von einem Bremskolben begrenzt ist, wobei der hydraulische Betriebsdruckraum zur Durchführung von Betriebsbremsungen mit hydraulischem Druckmittel beaufschlagbar ist, so dass der Bremskolben zur Erzielung einer Bremswirkung entlang einer Kolbenlängsachse betätigbar ist, und wobei die Feststellbremsvorrichtung auf den Bremskolben mittels einer Betätigungseinrichtung wirkt, die den Bremskolben zur Durchführung von Feststellbremsungen mit Hilfe eines von einem elektromechanischen Aktuator angetriebenen Wälzkörperrampengetriebes betätigt und in der betätigten Stellung hält.

Eine derartige hydraulische Fahrzeugbremse ist beispielsweise aus der WO 2004/099645 A1 bekannt. Bei der vorbekannten Fahrzeugbremse ist ein Schwenkhebel mit einer Rampenanordnung verbunden. Zur Betätigung der Feststellbremse muss der Schwenkhebel verschwenkt werden. Dazu ist gemäß einer ersten Ausführung eine Exzenteranordnung vorgesehen, die von einem motorischen Antrieb betätigt wird, wobei der Schwenkhebel bei Aktivierung des motorischen Antriebs auf der Exzenterscheibe abgleitet und sich dabei verschwenkt. Gemäß einer zweiten Ausführung wird der Hebel von einem motorischen Linearantrieb verschwenkt. Die vorbekannte Fahrzeugbremse benötigt zur Betätigung jedoch eine vergleichsweise große elektrische Leistungsaufnahme, was in einem Kraftfahrzeug mit beschränkter elektrischer Leistungskapazität als nachteilig anzusehen ist.

Außerdem ist aus der EP 1 584 835 A1 eine Scheibenbremse mit Feststellbremsmechanismus bekannt, der ein Wälzkörperrampengetriebe aufweist. Dieses Wälzkörperrampengetriebe ist über einen Hebel und ein Kegelradgetriebe betätigbar, wobei das erste Kegelrad mit dem Hebel und das zweite Kegelrad mit der Antriebsrampe verbunden ist. Eine elektromechanische Betätigung des Wälzkörperrampengetriebes ist dagegen nicht vorgesehen.

US-A-2003/0042084 zeigt eine hydraulische Fahrzeugbremse gemäß dem Oberbegriff des Anspruchs 1.

Der vorliegenden Erfindung liegt daher die Aufgabe zugrunde, eine hydraulische Fahrzeugbremse der eingangs genannten Gattung dahingehend zu verbessern, dass eine vereinfachte Montage des Rampengetriebe und insbesondere eine Verpressvorgang in Bremsgehäuse ermöglicht.

Diese Aufgabe wird erfindungsgemäß durch eine Vorrichtung mit den Merkmalen des Anspruchs 1 gelöst.

Weitere vorteilhafte Ausgestaltungen sind den Unteransprüchen entnehmbar. So ist in einer besonders vorteilhaften Weiterbildung des Erfindungsgegenstandes vorgesehen, dass das zweistufige Getriebe als zweistufiges Schneckengetriebe ausgebildet ist, wobei die erste und/oder die zweite Getriebestufe selbsthemmend ausgeführt ist.

Bei einer alternativen Ausführungsform wird das zweistufige Getriebe durch eine Kombination eines Kronenradgetriebes und eines Schneckengetriebes gebildet, wobei das Schneckengetriebe die zweite Getriebestufe bildet und selbsthemmend ausgeführt ist. Eine weitere Alternative sieht vor, dass das zweistufige Getriebe als eine Kombination eines Vorlegegetriebes und eines Exzentergetriebes ausgebildet ist, wobei das Exzentergetriebe die zweite Getriebestufe bildet und selbsthemmend ausgeführt ist.

Bei einer besonders bevorzugten Ausführungsform des Erfindungsgegenstandes ist vorgesehen, dass der elektromechanische Aktuator derart angeordnet ist, dass sich dessen Ausgangswelle parallel zur Kolbenlängsachse befindet.

Bei einer vorteilhaften Weiterbildung des Erfindungsgegenstandes ist der elektromechanische Aktuator gegenüber dem Bremsgehäuse und einem Gehäuse, das das zweistufigen Getriebe und den elektromechanischen Aktuator aufnimmt, mit Hilfe von Dämpfungselementen entkoppelt. Durch diese Maßnahme können die Geräuschentwicklung und die Vibrationen des elektromechanischen Aktuators nicht auf die angrenzenden Bauteile übertragen werden und die Geräuschbelastung der Umwelt wird auf ein Minimum reduziert.

Zur Erfassung der Winkelstellung der Ausgangswelle des elektromechanischen Aktuators oder zur Erfassung der Winkelstellung eines Getriebeelementes ist ein Sensorelement vorgesehen. Außerdem sind Mittel zur Erfassung der Stromaufnahme des elektromechanischen Aktuators vorgesehen. Der Weg des Bremskolbens kann auf diese Weise erfasst werden und dient neben dem Messwert der Stromaufnahme des elektromechanischen Aktuators als Regelgröße für die Regelung der Zuspannkraft.

Bei einer besonders vorteilhaften Weiterbildung des Erfindungsgegenstandes ist vorgesehen, dass mindestens ein Federelement im Kraftfluss oder im Momentenfluss zur Aufrechterhaltung der eingestellten Zuspannkraft und zur Kompensation von thermischen Schrumpfeffekten vorgesehen ist. Dabei ist das im Kraftfluss angeordnete Federelement als ein Paket von Tellerfedern ausgebildet. Es wirkt auf den Bremskolben und ist hydraulisch und/oder elektromechanisch ladbar. Das im Momentenfluss angeordnete Federelement ist als Drehfeder ausgebildet, wirkt auf ein Getriebeelement und ist elektromechanisch ladbar.

Die Fahrzeugbremse ist modular aufgebaut und der elektromechanische Aktuator bildet gemeinsam mit dem zweistufigen Getriebe eine selbständig handhabbare Baugruppe.

Bei einer vorteilhaften Weiterbildung des Erfindungsgegenstandes ist ein mechanisches Entriegelungsmittel zur Entriegelung der Feststellbremse vorgesehen. Durch diese Maßnahme ist eine Notentriegelung der Feststellbremse bei Ausfall oder Defekt der elektrischen Energieversorgung durchführbar.

Eine weitere, vorteilhafte Weiterbildung des Erfindungsgegenstandes sieht vor, dass das Wälzkörperrampengetriebe durch eine Antriebs- sowie eine Abtriebsrampe gebildet ist, wobei zwischen den Rampenhälften Wälzkörper vorgesehen sind, über welche die Antriebsrampe mit der Abtriebsrampe in Kontakt steht.

Die Erfindung wird nachfolgend anhand eines Ausführungsbeispiels im Zusammenhang mit der beiliegenden Zeichnung näher erläutert. In der Zeichnung zeigen:
- Fig. 1: eine dreidimensionale Ansicht eines Ausführungsbeispiels der erfindungsgemäßen Fahrzeugbremse;
- Fig. 2: eine Schnittdarstellung der Fahrzeugbremse nach Fig. 1;
- Fig. 3: eine Explosionsdarstellung der Fahrzeugbremse nach Fig. 1;
- Fig. 4: eine Explosionsdarstellung einer ersten Ausführung eines zweistufigen Getriebes;
- Fig. 5a,b,c: schematische Darstellungen von drei Ausführungen eines zweistufigen Getriebes;
- Fig. 6a,b: eine schematische Darstellung eines im Momentenfluss angeordneten Federelementes und
- Fig. 7: eine schematische Darstellung eines im Kraftfluss angeordneten Federelementes.

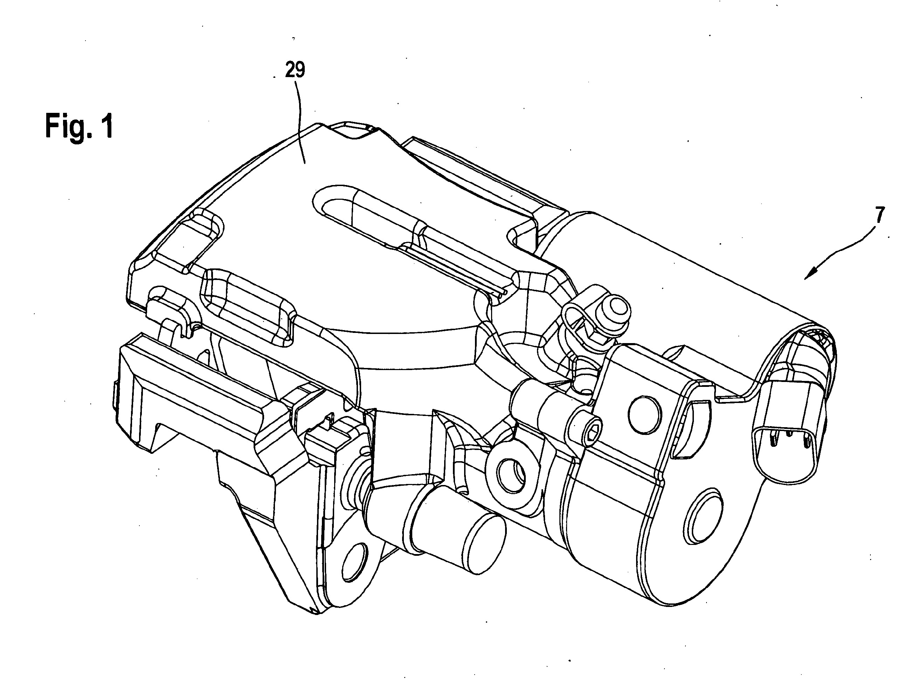

Die erfindungsgemäße Fahrzeugbremse ist in Fig. 1 in dreidimensionaler Ansicht dargestellt. Die erfindungsgemäße Fahrzeugbremse weist einerseits eine hydraulisch betätigbare Betriebsbremse und andererseits eine elektromechanisch betätigbare Feststellbremse auf. Wie aus Fig. 1 ersichtlich ist, ist ein elektromechanischer Aktuator 7, ein zweistufiges Getriebe sowie die erforderliche Sensorik integriert. Die Grundidee der vorliegenden Erfindung ist es, die Feststellbremsbetätigung eines bekannten Kombisattels mit Ball&Ramp-Betätigung mit einem elektromechanischen Antrieb statt einer konventionellen Seilbetätigung auszustatten.

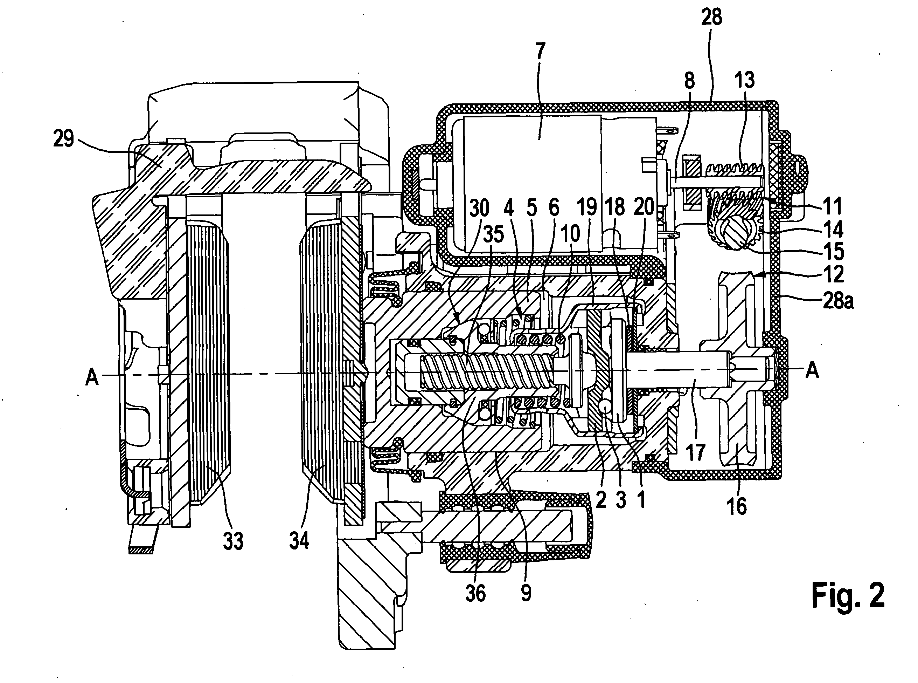

Die in Fig. 2 dargestellte erfindungsgemäße hydraulische Fahrzeugbremse weist ein Bremsgehäuse 29 auf, welches den äußeren Rand einer nicht dargestellten Bremsscheibe und zwei auf beiden Seiten der Bremsscheibe angeordnete Bremsbeläge 33, 34 umgreift. Das Bremsgehäuse 29 bildet auf seiner Innenseite einen Bremszylinder 9, der einen Bremskolben 5 axial verschiebbar aufnimmt. In den zwischen Bremszylinder 9 und Bremskolben 5 gebildeten Betriebsdruckraum 6 kann zur Durchführung von Betriebsbremsungen Bremsflüssigkeit zugeführt werden, so dass sich ein Bremsdruck aufbaut, der den Bremskolben 5 axial entlang einer Kolbenlängsachse A zur Bremsscheibe hin verschiebt. Dadurch wird der dem Bremskolben 5 zugewandte Bremsbelag 34 gegen die Bremsscheibe gedrückt, wobei als Reaktion das Bremsgehäuse 29 sich in der entgegengesetzten Richtung verschiebt und dadurch auch den anderen Bremsbelag 33 gegen die Bremsscheibe drückt.

Eine Betätigungseinrichtung 4, die zur Durchführung einer Feststellbremsvorganges erforderlich ist, wird im Wesentlichen durch ein Wälzkörperrampengetriebe 1, 2, 3 gebildet. Das Wälzkörperrampengetriebe 1, 2, 3 ist von einem elektromechanischen Aktuator 7 betätigbar und wird durch eine Antriebs- 1 sowie eine Abtriebsrampe 2 gebildet. Wie aus Fig. 2 ersichtlich ist, ist das Wälzkörperrampengetriebe 1, 2, 3 für die Generierung der Zuspannkraft zur Durchführung eines Feststellbremsvorganges verantwortlich. Aufgrund des hohen Wirkungsgrades bietet sich das Wälzkörperrampengetriebe 1, 2, 3 an. Wie bereits erwähnt, besteht das Wälzkörperrampengetriebe 1, 2, 3 aus einer Antriebs- 1 und einer Abstriebsrampe 2. Zwischen den Rampenhälften befinden sich als Stahlkugeln ausgebildete Wälzkörper 3 über welche die Antriebsrampe 1 mit der Abtriebsrampe 2 in Kontakt steht. Eine Druckfeder 10 übt auf die Abtriebsrampe 2 eine Axialkraft aus. Die Abtriebsrampe 2 ist in einer Patrone 19 verdrehgesichert und kann nur eine Hubbewegung entlang der Kolbenlängsachse A ausführen. Die Patrone 19 ist mit einer Rampenstützscheibe 20 verbunden, die wiederum im Bremsgehäuse 29 verpresst ist und dadurch radial und axial gehäusefest ist. Die Antriebsrampe 1 kann eine Rotationsbewegung ausüben und wird mit der Axialkraft der Druckfeder 10 auf ein Axiallager 18 gepresst, das sich auf der Rampenstützscheibe 20 abstützt. Im Einzelnen bewirkt das Wälzkörperrampengetriebe 1, 2, 3 durch Verdrehung der beiden Rampenhälften 1, 2 gegeneinander ein Abrollen der Wälzkörper 3 in den Rampenbahnen. Dies bedeutet einerseits eine sehr hohe Drehzahluntersetzung und andererseits in Form eines 'Rot-Trans-Getriebes' eine Umsetzung der rotatorischen Eingangsgröße in eine translatorische Ausgangsgröße. Als translatorische Ausgangsgröße wird ein Getriebehub in Richtung der Kolbenlängsachse A erzeugt. Dieser Getriebehub wird bei elektromechanischer Zuspannung des Bremssattels mittels des elektromechanischen Aktuators 7 über eine mechanische Nachstellvorrichtung 30, die als Betätigungselement wirkt, auf den Bremskolben 5 übertragen.Dabei entspricht der Getriebehub im Wesentlichen dem Zuspannhub des Bremskolbens.

Die Nachstellvorrichtung 30 berücksichtigt den Belagverschleiß an den Bremsbelägen 33, 34 und gleicht diesen durch Verlängerung in Richtung der Kolbenlängsachse A aus. Dadurch kann der notwendige Zuspannhub des Bremskolbens 5 und somit der Getriebehub des Wälzkörperrampengetriebes 1, 2, 3 konstant gehalten werden. Die Nachstellvorrichtung 30 steht einerseits verdrehfest mit dem Wälzkörperrampengetriebe 1, 2, 3 und andererseits mit dem Bremskolben 5 in Verbindung. Sie ist in Richtung der Kolbenlängsachse A verlängerbar und beinhaltet im Wesentlichen eine Mutter-Spindel-Anordnung mit einer verdrehfest an der Abtriebsrampe 2 anliegenden Spindel 35 und einer drehbar auf der Spindel 35 angeordneten Mutter 36, die sich am Bremskolben 5 abstützt. Mutter 36 und Spindel 35 sind mittels mehrerer Federn gegeneinander verspannt, so dass bei Bremsbelagverschleiß eine Verlängerung der Nachstellvorrichtung 30 in Richtung der Kolbenlängsachse A bewirkt wird. Der grundsätzliche Aufbau einer solchen Nachstellvorrichtung 30 ebenso wie ihre Funktion sind beispielsweise bereits aus der DE 195 21 634 A1 bekannt und sollen hier nicht näher erläutert werden.

Damit die Antriebsrampe 1 in Rotation versetzt werden kann ist ein Schaft 17 vorgesehen, der mit der Antriebsrampe 1 verbunden ist und radial in einem Radialgleitlager gelagert ist. Der Schaft 17 ragt aus dem Bremsgehäuse 29 heraus und wird unter Zwischenschaltung eines zweistufigen Getriebes von dem elektromechanischen Aktuator 7 angetrieben. Dabei sind Mittel zum Abdichten des Betriebsdruckraumes 6 in der Bohrung des Bremsgehäuses 29, durch die der Schaft 17 ragt, vorgesehen. Der elektromechanische Aktuator 7 und das zweistufige Getriebe werden dabei von einem Gehäuse 28 aufgenommen, das mit einem Gehäusedeckel verschließbar ist. In der in Fig. 2 dargestellten ersten Ausführungsform ist das zweistufige Getriebe als zweistufiges Schneckengetriebe 11, 12 ausgebildet. Schneckengetriebe sind eine Kategorie der Schraubwälzgetriebe, bei denen im Gegensatz zu den Wälzgetrieben auch ein Gleitanteil in der Bewegung vorhanden ist. Aufgebaut ist ein solches Schneckengetriebe aus einem schraubenförmig verzahnten Rad, der Schnecke, und einem darin kämmenden schrägverzahnten Rad, dem Schneckenrad.

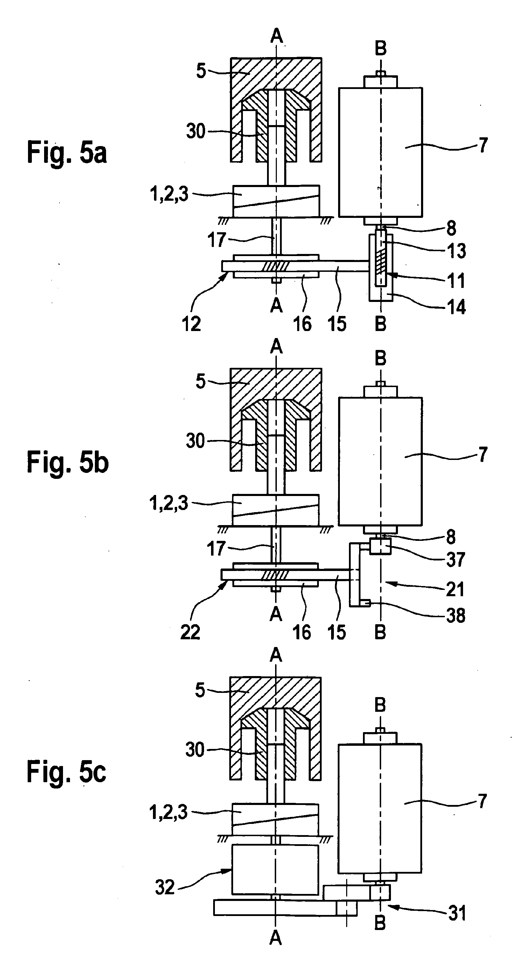

Die erste Getriebestufe, das heißt das erste Schneckengetriebe 11, ist eingangsseitig mit der Ausgangswelle 8 des elektromechanischen Aktuators 7 verbunden, während die zweite Getriebestufe, das heißt das zweite Schneckengetriebe 12, ausgangsseitig mit dem Schaft 17 bzw. mit dem Wälzkörperrampengetriebe 1, 2, 3 verbunden ist. Wie es in Fig. 2 dargestellt ist, ist eine erste Schnecke 13 auf die Ausgangswelle 8 des elektromechanischen Aktuators 7 aufgesteckt und kämmt ein erstes Schneckenrad 14. Wie nachfolgend anhand von Fig. 5a noch näher erläutert wird, ist eine zweite Schnecke 15 auf das Drehzentrum der ersten Schneckenrad 14 aufgesteckt und wird von diesem in Rotation versetzt. Diese zweite Schnecke 15 wiederum kämmt ein zweites Schneckenrad 16, das drehfest mit dem Schaft 17 verbunden ist und den Schaft 17 gemeinsam mit der Antriebsrampe 1 in Rotation versetzt und dabei eine Hubbewegung der Abtriebsrampe 2 erzeugt, wie bereits beschrieben wurde. Damit die auf diese Weise eingestellte Zuspannkraft während eines Feststellbremsvorganges erhalten bleibt, ist das zweite Schneckengetriebe 12 selbsthemmend ausgeführt.

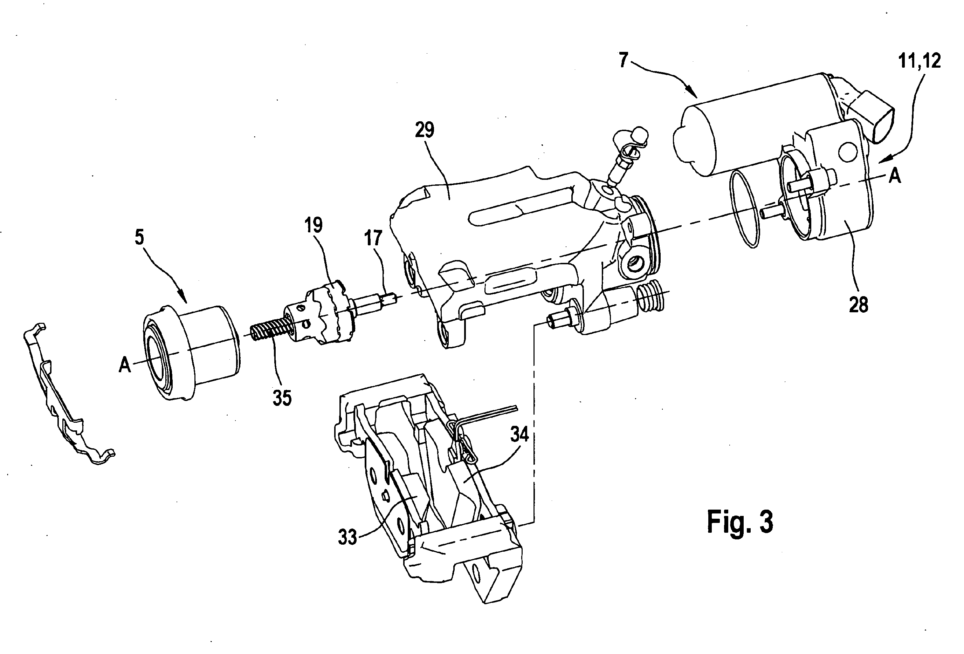

In Fig. 3 ist eine sogenannte Explosionsdarstellung der in Fig. 1 und 2 dargestellten Fahrzeugbremse dargestellt. Am rechten Ende der gestrichelt dargestellten Kolbenlängsachse A befindet sich das Gehäuse 28, das den elektromechanischen Aktuator 7 und das zweistufige Getriebe, das heißt das erste und das zweite Schneckengetriebe 11, 12, aufnimmt. Gemeinsam bilden sie eine elektromechanische Betätigungseinheit, die eine selbstständig handhabbare Baugruppe bildet und vorprüfbar ist. Diese elektromechanische Betätigungseinheit wird in das Bremsgehäuse 29 gesteckt. Auf der linken Seite des Bremsgehäuses 29 in Fig. 3 ist die anhand von Fig. 2 bereits erwähnte Patrone 19 dargestellt, die das Wälzkörperrampengetriebe 1, 2, 3 aufnimmt. Wie bereits anhand von Fig. 2 erwähnt, ist das Wälzkörperrampengetriebe 1, 2, 3 einerseits mit der Spindel 35 und andererseits mit dem Schaft 17 verbunden. Weiter der Kolbenlängsachse A folgend wird die Fahrzeugbremse durch den Bremskolben 5 sowie durch die beiden Bremsbeläge 33, 34, die sich in einer Halterung befinden, ergänzt. Die Anordnung der elektromechanischen Betätigungseinheit parallel zur Kolbenlängsachse A gestattet einerseits eine besonders kompakte Bauform für den Bremssattel und andererseits wird die in Fig. 3 dargestellte modulare Bauweise ermöglicht.

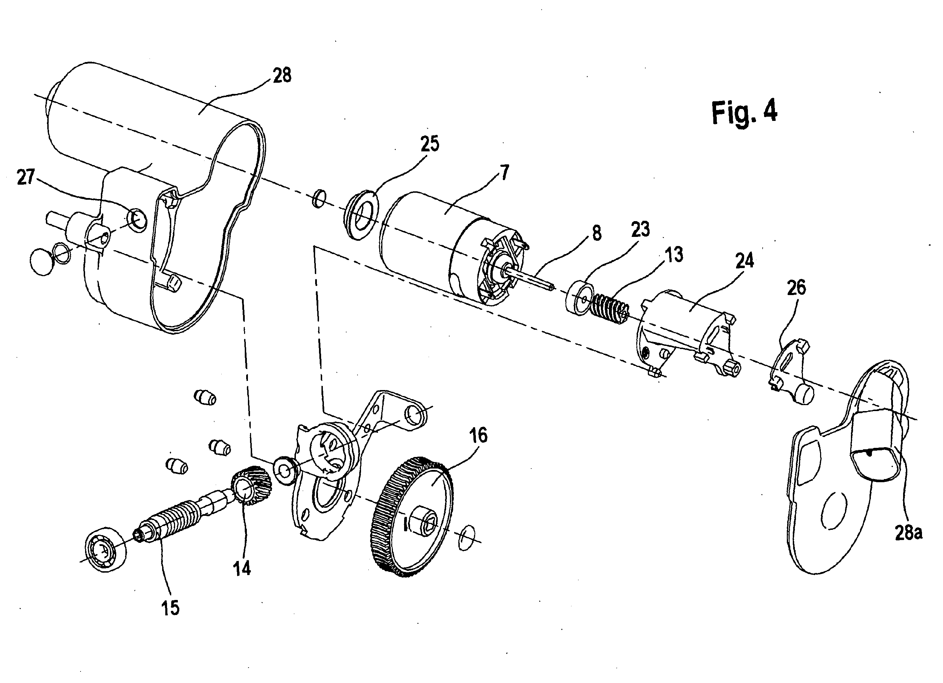

Fig. 4 zeigt die erste Ausführung des zweistufigen Getriebes zwischen dem elektromechanischem Aktuator 7 und dem Wälzkörperrampengetriebe 1, 2, 3 als erstes und zweites Schneckengetriebe 11, 12. Wie bereits erwähnt nimmt das Gehäuse 28 den elektromechanischen Aktuator 7 auf. Dabei ist vorgesehen, dass der elektromechanische Aktuator 7 gegenüber dem Gehäuse 28 entkoppelt ist, damit die Geräuschentwicklung und die Vibrationen des elektromechanischen Aktuators 7 nicht auf die angrenzenden Bauteile übertragen werden und die Geräuschbelastung der Umwelt auf ein Minimum reduziert wird. Zu diesem Zweck wird ein als Gummilager ausgebildetes erstes Dämpfungselement 25 zwischen dem elektromechanischen Aktuator 7 und dem Gehäuse 28 angeordnet. Ein zweites Dämpfungselement 26, das als Dämpfungsgummi ausgebildet ist, ist zu demselben Zweck wirkungsmäßig zwischen dem elektromechanischen Aktuator 7 und dem Gehäusedeckel 28a angeordnet. Wie bereits anhand von Fig. 2 erwähnt, wird auf die Ausgangswelle 8 des elektromechanischen Aktuators 7 die erste Schnecke 13 aufgesteckt. Außerdem wird ein Encoder 23 auf die Ausgangswelle aufgesteckt, der mit einem gehäusefesten Sensorelement 24 zusammenwirkt und die Winkelstellung der Ausgangswelle 8 erfasst. Der Weg des Bremskolbens 5 kann so erfasst werden und dient neben dem Messwert der Stromaufnahme des elektromechanischen Aktuators 7 als Regelgröße für die Regelung der Zuspannkraft. Zur Erfassung der Stromaufnahme des elektromechanischen Aktuators 7 ist ebenfalls ein geeignetes Erfassungsmittel vorgesehen.

Wie der Explosionsdarstellung in Fig. 4 weiterhin zu entnehmen ist, kämmt die erste Schnecke 13 das erste Schneckenrad 14. In eine zentrale Bohrung des ersten Schneckenrads 14 wird die zweite Schnecke 15 eingesteckt, sodass eine Rotation des ersten Schneckenrades 14 eine Rotation der zweiten Schnecke 15 zur Folge hat. Wie bereits erwähnt kämmt die zweite Schnecke 15 das zweite Schneckenrad 16.

Außerdem ist in Fig. 4 ersichtlich, dass im Gehäuse 28 eine Gehäuseöffnung 27 vorgesehen ist, die einen Zugriff für eine mechanische Entriegelung zur Notentriegelung der Feststellbremse bei Ausfall oder Defekt der elektrischen Energieversorgung ermöglicht.

Alternativ kann das ebenerwähnte Sensorelement 24 anstelle der Winkelstellung der Ausgangswelle 8 des elektromechanischen Aktuators 7 auch die Winkelstellung der beiden Schnecken 13, 15 oder der beiden Schneckenrädern 14, 16 erfassen, wodurch ebenfalls der Weg des Bremskolbens 5 und damit die eingestellte Zuspannkraft ermittelbar ist.

In den Fig. 5a, b, c sind drei Ausführungsformen des zweistufigen Getriebes zwischen dem elektromechanischem Aktuator 7 und dem Wälzköperrampengetriebe 1, 2, 3 dargestellt. Die in Fig. 5a dargestellte, erste Ausführungsform ist bereits anhand der Fig. 2 und 4 beschrieben worden. Es handelt sich dabei um zwei Schneckengetriebe 11, 12. Wie bereits erwähnt wird die erste Schnecke 13 von der Ausgangswelle 8 des elektromechanischen Aktuators 7 in Rotation versetzt. Die erste Schnecke 13 kämmt das erste Schneckenrad 14, welches wiederum die zweite Schnecke 15 in Rotation versetzt, da die zweite Schnecke 15 mit dem Drehzentrum des ersten Schneckenrades 14 verbunden ist. Die zweite Schnecke 15 kämmt ihrerseits ein zweites Schneckenrad 16 und beaufschlagt den Schaft 17 und damit das Wälzkörperrampengetriebe 1, 2, 3 mit einem Drehmoment. Dadurch vollzieht das Wälzkörperrampengetriebe 1, 2, 3 einen translatorischen Hub, der über die mechanische Nachstellvorrichtung 30 auf den Bremskolben 5 wirkt und somit eine Zuspannkraft erzeugt. Damit die eingestellte Zuspannkraft während eines Feststellbremsvorganges erhalten bleibt ist das zweite Schneckengetriebe 12 selbsthemmend ausgeführt. Fig. 5a ist außerdem nochmals entnehmbar, dass der elektromechanische Aktuator 7 so angeordnet ist, dass sich seine Symmetrieachse B parallel zur Kolbenlängsachse A befindet.

In Fig. 5b ist eine zweite Ausführungsform des zweistufigen Getriebes dargestellt. Das zweistufige Getriebe ist dabei als eine Kombination eines Kronenradgetriebes 21 und eines Schneckengetriebes 22 ausgeführt. Auf die Ausgangswelle 8 des elektromechanischen Aktuators 7 wird ein Zahnrad 37 aufgesteckt, das mit einem Kronenrad 38 zusammenwirkt. Im Drehzentrum des Kronenrades 38 ist eine Schnecke 15 montiert, die ein mit dem Schaft 17 verbundenes Schneckenrad 16 kämmt. Bei einer Betätigung des elektromechanischen Aktuators 7 wird die Rotation der Ausgangswelle 8 über das Kronenradgetriebe 21 an das Schneckenradgetriebe 22 und damit an den Schaft 17 weitergeleitet, was eine Drehhubbewegung des Wälzkörperrampengetriebes 1, 2, 3 zur Folge hat, wie bereits beschrieben wurde. Um die so erzeugte Zuspannkraft des Bremskolbens 5 während eines Feststellbremsvorgangs aufrecht zu erhalten ist das Schneckengetriebe 22 selbsthemmend ausgeführt.

Bei der in Fig. 5c dargestellten dritten Ausführungsform wird das zweistufige Getriebe zwischen dem elektromechanischem Aktuator 7 und dem Wälzkörperrampengetriebe 1, 2, 3 als eine Kombination eines Vorgelegegetriebes 31 und eines Exzentergetriebes 32 ausgebildet. Ein Vorgelege ist ein Zusatzgetriebe und verringert die Umdrehungszahl der angetriebenen Welle. Das zur Verfügung stehende Drehmoment wird dadurch erhöht. Das Vorgelegegetriebe 31 und das Exzentergetriebe 32 wirken wie die bereits beschriebenen Ausführungsformen des zweistufigen Getriebes.

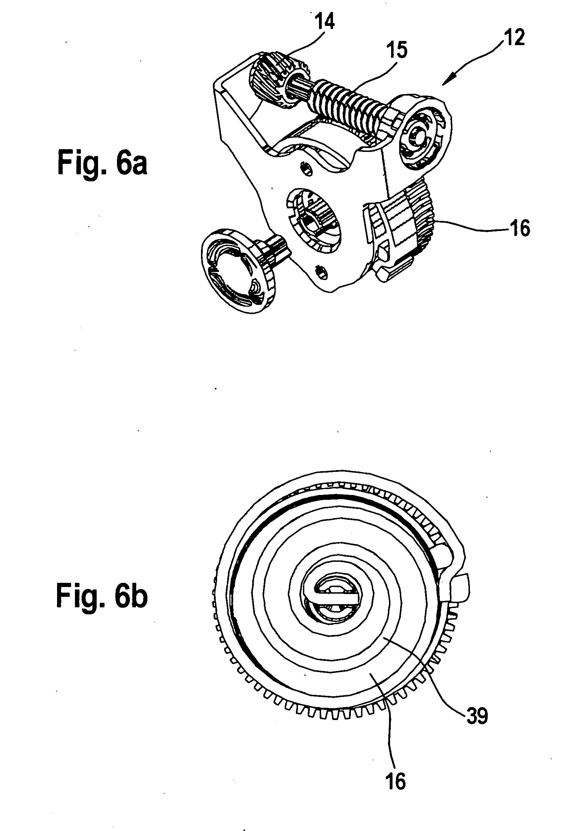

Das zweite Schneckengetriebe 12 der anhand von Fig. 5a beschriebenen Ausführung ist in Fig. 6a nochmals dargestellt. Es ist noch einmal erkennbar, dass die zweite Schnecke 15 ins Drehzentrum des ersten Schneckenrades 14 eingesteckt ist. Wie in Fig. 6b verdeutlicht ist, ist ein als Drehfeder 39 ausgebildetes Federelement zur Aufrechterhaltung der eingestellten Zuspannkraft vorgesehen. Die Drehfeder 39 wird dabei im Momentenfluss angeordnet und wirkt auf das zweite Schneckenrad 16. Es ist bei einer Drehung des Schneckenrades 16 spannbar bzw. ladbar und kompensiert thermische Schrumpfeffekte.

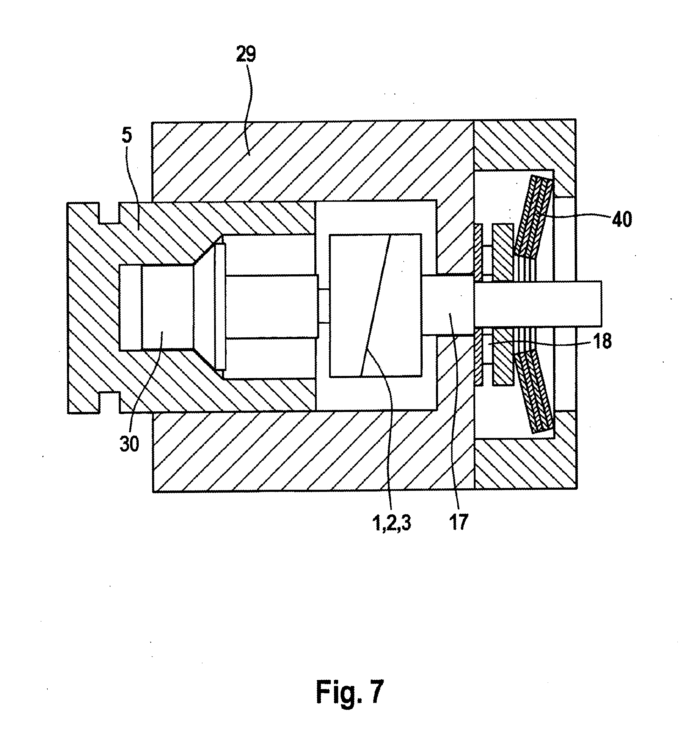

Alternativ ist zur Aufrechterhaltung der eingestellten Zuspannkraft und zur Kompensation von thermischen Schrumpfeffekten ein als Paket von Tellerfedern 40 ausgebildetes Federelement im Kraftfluss angeordnet, wie es in Fig. 7 dargestellt ist. Das Tellerfederpaket 40 wird unter dem anhand von Fig. 2 beschriebenen Axiallager 18 angebracht und ist hydraulisch und/oder mechanisch spannbar. Das Tellerfederpaket 40 wirkt über das Axiallager 18, das Wälzkörperrampengetriebe 1, 2, 3 und über die mechanische Nachstellvorrichtung auf den Bremskolben 5.

Durch die erwähnten Federelemente wird erreicht, dass die auf die Bremsbeläge 33, 34 einwirkende Zuspannkraft von thermisch bedingten Längenänderungen im Bereich des Bremssattels nahezu unabhängig ist.

Als Vorteile der vorliegenden Erfindung ist der hohe Gesamtwirkungsgrad der Getriebeanordnung und die damit verbundene geringere elektrische Leistungsaufnahme anzusehen. Ein geringeres Laufgeräusch wird durch die Verwendung von geräuschoptimierten, in Gummidämpfern gelagerten Getrieben erreicht und durch die Integration eines Federelementes ist kein Nachspannen der thermisch belasteten Bremse während des Abkühlens notwendig.

### Bezugszeichenliste

- 1: Antriebsrampe
- 2: Abtriebsrampe
- 3: Wälzkörper
- 4: Betätigungseinrichtung
- 5: Bremskolben
- 6: hydraulischer Betriebsdruckraum
- 7: elektromechanischer Aktuator
- 8: Ausgangswelle
- 9: Bremszylinder
- 10: Druckfeder
- 11: erstes Schneckengetriebe
- 12: zweites Schneckengetriebe
- 13: erste Schnecke
- 14: erstes Schneckenrad
- 15: zweite Schnecke
- 16: zweites Schneckenrad
- 17: Schaft
- 18: Axiallager
- 19: Patrone
- 20: Rampenstützscheibe
- 21: Kronenradgetriebe
- 22: Schneckengetriebe
- 23: Encoder
- 24: Sensorelement
- 25: Dämpfungselement
- 26: Dämpfungselement
- 27: Zugriff mechanische Entriegelung
- 28: Gehäuse
- 28a: Gehäusedeckel
- 29: Bremsgehäuse
- 30: mechanische Nachstellvorrichtung
- 31: Vorgelegegetriebe
- 32: Exzentergetriebe
- 33: Bremsbelag
- 34: Bremsbelag
- 35: Spindel
- 36: Gewindemutter
- 37: Zahnrad
- 38: Kronenrad
- 39: Federelement/Drehfeder
- 40: Federelement/Tellerfeder

## Patentansprüche

1. Hydraulische Fahrzeugbremse mit Feststellbremsvorrichtung, insbesondere für Kraftfahrzeuge, mit einem Bremsgehäuse (29), in dem ein hydraulischer Betriebsdruckraum (6) von einem Bremskolben (5) begrenzt ist, wobei der hydraulische Betriebsdruckraum (6) zur Durchführung von Betriebsbremsungen mit hydraulischem Druckmittel beaufschlagbar ist, so dass der Bremskolben (5) zur Erzielung einer Bremswirkung entlang einer Kolbenlängsachse (A) betätigbar ist, und wobei die Feststellbremsvorrichtung auf den Bremskolben (5) mittels einer Betätigungseinrichtung (4) wirkt, die den Bremskolben (5) zur Durchführung von Feststellbremsungen mit Hilfe eines von einem elektromechanischen Aktuator (7) angetriebenen Wälzkörperrampengetriebes (1, 2, 3) betätigt und in der betätigten Stellung hält, und dass zwischen dem elektromechanischen Aktuator (7) und der Betätigungseinrichtung (4) ein zweistufiges Getriebe zwischengeschaltet ist, wobei die erste Getriebestufe (11, 21, 31) eingangsseitig mit einer Ausgangswelle (8) des elektromechanischen Aktuators (7) und die zweite Getriebestufe (12, 22, 32) ausgangsseitig mit dem Wälzkörperrampengetriebe (1, 2, 3) verbunden ist **dadurch gekennzeichnet, dass** Axialkraft im Wälzkörperrampengetriebe (1,2,3) durch eine im Bremsgehäuse (29) verpresste Rampenstützscheibe (20) abgestützt ist, dass die Rampenstützscheibe (20) mit einer Patrone (19) für das Wälzkörperrampengetriebe (1,2,3) verbunden ist, und dass die Patrone (19) im Bremsgehäuse (29) gehäusefest angeordnet ist.

2. Hydraulische Fahrzeugbremse nach Anspruch 1, **dadurch gekennzeichnet, dass** das zweistufige Getriebe als zweistufiges Schneckengetriebe (11, 12) ausgebildet ist, wobei die erste und/oder die zweite Getriebestufe (11, 12) selbsthemmend ausgeführt ist.

3. Hydraulische Fahrzeugbremse nach Anspruch 1, **dadurch gekennzeichnet, dass** das zweistufige Getriebe durch eine Kombination eines Kronenradgetriebes (21) und eines Schneckengetriebes (22) gebildet wird, wobei das Schneckengetriebe (22) die zweite Getriebestufe bildet und selbsthemmend ausgeführt ist.

4. Hydraulische Fahrzeugbremse nach Anspruch 1, **dadurch gekennzeichnet, dass** das zweistufige Getriebe als eine Kombination eines Vorlegegetriebes (31) und eines Exzentergetriebes (32) ausgebildet ist, wobei das Exzentergetriebe (32) die zweite Getriebestufe bildet und selbsthemmend ausgeführt ist.

5. Hydraulische Fahrzeugbremse nach einem der vorhergehenden Ansprüche, **dadurch gekennzeichnet, dass** der elektromechanische Aktuator (7) derart angeordnet ist, dass sich dessen Ausgangswelle (8) parallel zur Kolbenlängsachse (A) befindet.

6. Hydraulische Fahrzeugbremse nach Anspruch 5, **dadurch gekennzeichnet, dass** der elektromechanische Aktuator (7) gegenüber dem Bremsgehäuse (29) und einem Gehäuse (28), das das zweistufigen Getriebe und den elektromechanischen Aktuator (7) aufnimmt, mit Hilfe von Dämpfungselementen (25, 26) entkoppelt ist.

7. Hydraulische Fahrzeugbremse nach einem der vorhergehenden Ansprüche, **dadurch gekennzeichnet, dass** ein Sensorelement (24) zur Erfassung der Winkelstellung der Ausgangswelle (8) des elektromechanischen Aktuators (7) oder zur Erfassung der Winkelstellung eines Getriebeelementes (13, 14, 15, 16) vorgesehen ist.

8. Hydraulische Fahrzeugbremse nach einem der vorhergehenden Ansprüche, **dadurch gekennzeichnet, dass** Mittel zur Erfassung der Stromaufnahme des elektromechanischen Aktuators (7) vorgesehen sind.

9. Hydraulische Fahrzeugbremse nach einem der vorhergehenden Ansprüche, **dadurch gekennzeichnet, dass** mindestens ein Federelement (39, 40) im Kraftfluss oder im Momentenfluss zur Aufrechterhaltung der eingestellten Zuspannkraft und zur Kompensation von thermischen Schrumpfeffekten vorgesehen ist.

10. Hydraulische Fahrzeugbremse nach Anspruch 9, **dadurch gekennzeichnet, dass** das im Kraftfluss angeordnete Federelement als ein Paket von Tellerfedern (40) ausgebildet ist, auf den Bremskolben (5) wirkt und hydraulisch und/oder elektromechanisch ladbar ist.

11. Hydraulische Fahrzeugbremse nach Anspruch 9, **dadurch gekennzeichnet, dass** das im Momentenfluss angeordnete Federelement als Drehfeder (39) ausgebildet ist, auf ein Getriebeelement (13, 14, 15, 16) wirkt und elektromechanisch ladbar ist.

12. Hydraulische Fahrzeugbremse nach einem der vorhergehenden Ansprüche, **dadurch gekennzeichnet, dass** die Fahrzeugbremse modular aufgebaut ist und dass insbesondere der elektromechanische Aktuator (7) gemeinsam mit dem zweistufigen Getriebe eine selbständig handhabbare Baugruppe bildet.

13. Hydraulische Fahrzeugbremse nach einem der vorhergehenden Ansprüche, **dadurch gekennzeichnet, dass** ein mechanisches Entriegelungsmittel zur Entriegelung der Feststellbremse vorgesehen ist.

14. Hydraulische Fahrzeugbremse nach einem der vorhergehenden Ansprüche, **dadurch gekennzeichnet, dass** das Wälzkörperrampengetriebe (1, 2, 3) durch eine Antriebs- (1) sowie eine Abtriebsrampe (2) gebildet ist, wobei zwischen den Rampenhälften (1, 2) Wälzkörper (3) vorgesehen sind, über welche die Antriebsrampe (1) mit der Abtriebsrampe (2) in Kontakt steht.

## Claims

1. Hydraulic vehicle brake having a parking brake device, in particular for motor vehicles, having a brake housing (29) in which a hydraulic service pressure chamber (6) is bounded by a brake piston (5), with it being possible, in order to carry out service braking operations, for the hydraulic service pressure chamber (6) to be charged with hydraulic pressure medium such that the brake piston (5) can be actuated along a piston longitudinal axis (A) so as to obtain a braking action, and with the parking brake device acting on the brake piston (5) by means of an actuating device (4), which actuates the brake piston (5) and holds the latter in the actuated position in order to carry out parking braking operations by means of a rolling body ramp gearing (1, 2, 3) which is driven by an electromechanical actuator (7), and with a two-stage gearing being interposed between the electromechanical actuator (7) and the actuating device (4), with the first gearing stage (11, 21, 31) being connected at the input side to an output shaft (8) of the electromechanical actuator (7) and with the second gearing stage (12, 22, 32) being connected at the output side to the rolling body ramp gearing (1, 2, 3), **characterized in that** axial force in the rolling body ramp gearing (1, 2, 3) is supported by a ramp support disc (20) which is pressed into the brake housing (29), **in that** the ramp support disc (20) is connected to a cartridge (19) for the rolling body ramp gearing (1, 2, 3), and **in that** the cartridge (19) is arranged in the brake housing (29) so as to be fixed with respect to the housing.

2. Hydraulic vehicle brake according to Claim 1,
**characterized in that** the two-stage gearing is designed as a two-stage worm gear (11, 12), with the first and/or the second gearing stage (11, 12) being of self-locking design.

3. Hydraulic vehicle brake according to Claim 1,
**characterized in that** the two-stage gearing is formed by a combination of a crown wheel gearing (21) and a worm gear (22), with the worm gear (22) forming the second gearing stage and being of self-locking design.

4. Hydraulic vehicle brake according to Claim 1,
**characterized in that** the two-stage gearing is designed as a combination of a reduction gearing (31) and an eccentric gearing (32), with the eccentric gearing (32) forming the second gearing stage and being of self-locking design.

5. Hydraulic vehicle brake according to one of the preceding claims, **characterized in that** the electromechanical actuator (7) is arranged such that its output shaft (8) is situated parallel to the piston longitudinal axis (A).

6. Hydraulic vehicle brake according to Claim 5,
**characterized in that** the electromechanical actuator (7) is decoupled from the brake housing (29), and from a housing (28) which holds the two-stage gearing and the electromechanical actuator (7), by means of damping elements (25, 26).

7. Hydraulic vehicle brake according to one of the preceding claims, **characterized in that** a sensor element (24) is provided to detect the angular position of the output shaft (8) of the electromechanical actuator (7) or to detect the angular position of a gearing element (13, 14, 15, 16).

8. Hydraulic vehicle brake according to one of the preceding claims, **characterized in that** means are provided for measuring the current consumption of the electromechanical actuator (7).

9. Hydraulic vehicle brake according to one of the preceding claims, **characterized in that** at least one spring element (39, 40) is provided in the power flow or in the torque flow in order to maintain the set application force and to compensate thermal shrinkage effects.

10. Hydraulic vehicle brake according to Claim 9,
**characterized in that** the spring element which is arranged in the power flow is designed as a pack of plate springs (40), which acts on the brake piston (5) and can be charged hydraulically and/or electromechanically.

11. Hydraulic vehicle brake according to Claim 9,
**characterized in that** the spring element which is arranged in the torque flow is designed as a rotary spring (39), acts on a gearing element (13, 14, 15, 16) and can be charged electromechanically.

12. Hydraulic vehicle brake according to one of the preceding claims, **characterized in that** the vehicle brake is of modular design and **in that** in particular the electromechanical actuator (7) together with the two-stage gearing forms an assembly which can be handled independently.

13. Hydraulic vehicle brake according to one of the preceding claims, **characterized in that** a mechanical unlocking means is provided for unlocking the parking brake.

14. Hydraulic vehicle brake according to one of the preceding claims, **characterized in that** the rolling body ramp gearing (1, 2, 3) is formed by a drive input ramp (1) and a drive output ramp (2), with rolling bodies (3) being provided between the ramp halves (1, 2), via which rolling bodies (3) the drive input ramp (1) is in contact with the drive output ramp (2).

## Revendications

1. Frein hydraulique pour véhicule doté d'un dispositif de frein de stationnement, en particulier pour véhicule automobile, avec un boîtier de frein (29) dans lequel une chambre de travail (6) sous pression hydraulique est délimitée par un piston de frein (5),
un fluide hydraulique sous pression pouvant être appliqué dans la chambre de travail (6) sous pression hydraulique en vue d'exécuter des freinages en fonctionnement en actionnant le piston de frein (5) le long de l'axe longitudinal (A) du piston pour obtenir un effet de freinage,
le dispositif de frein de stationnement agissant sur le piston de frein (5) et maintenant le piston de frein dans la position actionnée au moyen d'un dispositif d'actionnement (4) qui actionne le piston de frein (5) en vue d'exécuter un freinage de stationnement à l'aide d'une transmission (1, 2, 3) à rampe et corps de roulement entraînée par un actionneur électromécanique (7),
une transmission à deux étages étant intercalée entre l'actionneur électromécanique (7) et le dispositif d'actionnement (4),
le premier étage de transmission (11, 21, 31) étant relié par son entrée à l'arbre de sortie (8) de l'actionneur électromécanique (7) et le deuxième étage de transmission (12, 22, 32) étant relié par sa sortie à la transmission (1, 2, 3) à rampe et corps de roulement,
**caractérisé en ce que**
la force axiale qui agit dans la transmission (1, 2, 3) à rampe et corps de roulement est soutenue par un disque (20) de soutien de rampe comprimé dans le boîtier de frein (29),
**en ce que** le disque (20) de soutien de rampe est relié à une cartouche (19) pour la transmission (1, 2, 3) à rampe et corps de roulement et
**en ce que** la cartouche (19) est fixée dans le boîtier de frein (29).

2. Frein hydraulique pour véhicule selon la revendication 1, **caractérisé en ce que** la transmission à deux étages est configurée comme transmission (11, 12) à vis et deux étages, le premier et/ou le deuxième étage de transmission (11, 12) étant autobloquants.

3. Frein hydraulique pour véhicule selon la revendication 1, **caractérisé en ce que** la transmission à deux étages est formée d'une combinaison d'une transmission (21) à pignon en couronne et d'une transmission à vis (22), la transmission à vis (22) formant un deuxième étage de transmission et étant autobloquante.

4. Frein hydraulique pour véhicule selon la revendication 1, **caractérisé en ce que** la transmission à deux étages est formée d'une combinaison d'une transmission principale (31) et d'une transmission à excentrique (32), la transmission à excentrique (32) formant le deuxième étage de transmission et étant autobloquante.

5. Frein hydraulique pour véhicule selon l'une des revendications précédentes, **caractérisé en ce que** l'actionneur électromécanique (7) est disposé de telle sorte que son arbre de sortie (8) est parallèle à l'axe longitudinal (A) du piston.

6. Frein hydraulique pour véhicule selon la revendication 5, **caractérisé en ce que** des éléments d'amortissement (25, 26) découplent l'actionneur électromécanique (7) du boîtier de frein (29) et d'un boîtier (28) qui loge la transmission à deux étages et l'actionneur électromécanique (7).

7. Frein hydraulique pour véhicule selon l'une des revendications précédentes, **caractérisé en ce qu'**il présente un élément de détection (24) qui saisit la position angulaire de l'arbre de sortie (8) de l'actionneur électromécanique (7) ou qui saisit la position angulaire d'un élément (13, 14, 15, 16) de la transmission.

8. Frein hydraulique pour véhicule selon l'une des revendications précédentes, **caractérisé en ce qu'**il présente des moyens de saisie du courant consommé par l'actionneur électromécanique (7).

9. Frein hydraulique pour véhicule selon l'une des revendications précédentes, **caractérisé en ce qu'**il présente au moins un élément élastique (39, 40) transmettant des forces ou des couples pour maintenir la force de serrage qui a été établie et pour compenser les effets de retrait thermique.

10. Frein hydraulique pour véhicule selon la revendication 9, **caractérisé en ce que** l'élément élastique de transfert de forces est configuré comme paquet de ressorts en plateau (40), agit sur le piston de frein (5) et peut être chargé hydrauliquement et/ou électromécaniquement.

11. Frein hydraulique pour véhicule selon la revendication 9, **caractérisé en ce que** l'élément élastique transmettant des couples est configuré comme ressort de torsion (39), agit sur un élément (13, 14, 15, 16) de la transmission et peut être chargé électromécaniquement.

12. Frein hydraulique pour véhicule selon l'une des revendications précédentes, **caractérisé en ce que** le frein pour véhicule a une structure modulaire et **en ce qu'**en particulier l'actionneur électromécanique (7) forme avec la transmission à deux étages un module qui peut être manipulé séparément.

13. Frein hydraulique pour véhicule selon l'une des revendications précédentes, **caractérisé en ce qu'**il présente un moyen mécanique de déverrouillage qui déverrouille le frein de stationnement.

14. Frein hydraulique pour véhicule selon l'une des revendications précédentes, **caractérisé en ce que** la transmission (1, 2, 3) à rampe et corps de roulement est formée par une rampe d'entraînement (1) et une rampe entraînée (2), des corps de roulement (3) par lesquels la rampe d'entraînement (1) est en contact avec la rampe entraînée (2) étant prévus entre les moitiés de rampe (1, 2).
